# EUROPEAN PATENT APPLICATION

(11) **EP 4 654 323 A1**
(43) Date of publication of application: **26.11.2025**
(21) Application number: 24864339.7
(22) Date of filing: 08.08.2024
(51) Int. Cl.: H01M 10/0583, H01M 10/052

(54) **ELECTRODE SHEET FOLDING CONTROL METHOD AND DEVICE, ELECTRODE SHEET FOLDING DEVICE, AND BATTERY PRODUCTION SYSTEM**

(30) Priority: 12.09.2023 CN 202311168327
(71) Applicant: Contemporary Amperex Technology Co., Limited, Ningde, Fujian 352100 (CN)
(72) Inventor: WU, Kai, Ningde, Fujian 352100 (CN); PAN, Youcheng, Ningde, Fujian 352100 (CN); JIANG, Liang, Ningde, Fujian 352100 (CN); WU, Bingzhao, Ningde, Fujian 352100 (CN); CUI, Renhao, Ningde, Fujian 352100 (CN); LIN, Jiang, Ningde, Fujian 352100 (CN); OU, Fuming, Ningde, Fujian 352100 (CN)
(74) Representative: Ziebig Hengelhaupt Intellectual Property Attorneys Patentanwaltskanzlei PartGmbB
(86) International application number: PCT/CN2024/110772
(87) International publication number: WO 2025/055616

(57) **Abstract**

The present application relates to an electrode sheet folding control method and device, an electrode sheet folding device, and a battery production system. During folding of an electrode sheet group, a conveying component is controlled to operate, so as to drive the electrode sheet group to move towards a folding table. When a lamination region which is being folded starts to appear or is already present on the folding table, at least one of the conveying component and the folding table is controlled to rotate around respective axis centers, such that a connection line distance between a conveying end of the conveying component and a folding start point of the lamination region on the folding table that are located on the same side is increased. In this way, a receding space can be provided for folding of the lamination region, thus facilitating stress release of the lamination region during folding, reducing a pulling force of a lamination region in a folded state on a lamination region in a non-folded state, and reducing a bending and warping degree of the lamination region at a folding position. In this case, a formed laminated structure has a reduced probability of abnormal gaps at the folding position, thus effectively reducing the probability of lithium precipitation of an electrode sheet at the folding position, and improving quality of a laminated battery.

## Description

### CROSS-REFERENCE TO RELATED APPLICATIONS

The present application claims the priority of Chinese Patent Application No. 2023111683275, filed on September 12, 2023, and entitled "Electrode Sheet Folding Control Method And Device, Electrode Sheet Folding Device, And Battery Production System", which is incorporated herein by reference in its entirety.

### TECHNICAL FIELD

The present application relates to the field of battery production technologies, and in particular, to an electrode sheet folding control method and device, an electrode sheet folding device, and a battery production system.

### BACKGROUND

An electrode assembly is a component in which electrochemical reactions occur in a battery, and is mainly formed by winding or laminating a positive electrode sheet and a negative electrode sheet, and a separator is generally disposed between the positive electrode sheet and the negative electrode sheet. During lamination, the negative electrode sheet, the separator, and the positive electrode sheet that are laminated may be folded. However, due to the limitation of defects of a conventional electrode sheet folding manner, lithium precipitation is likely to occur at a folding position of an electrode sheet, which affects quality of a laminated battery.

### SUMMARY

Based on this, it is necessary to provide an electrode sheet folding control method and device, an electrode sheet folding device, and a battery production system, which can reduce the probability of lithium precipitation at a folding position of an electrode sheet and improve quality of a laminated battery.

In a first aspect, the present application provides an electrode sheet folding control method. An electrode sheet folding mechanism comprises a folding table and a conveying component for conveying an electrode sheet group; the electrode sheet group has several lamination regions in a length direction of the electrode sheet group, the lamination region has a folding start point on the folding table, and the conveying component comprises a first roller and a second roller that are located on both sides of the electrode sheet group; and an end of the first roller and an end of the second roller separately in contact with the electrode sheet group are both conveying ends, and the axis center of the conveying component is located on a connection line between the two conveying ends. The electrode sheet folding control method comprises the following steps: controlling the conveying component to drive the electrode sheet group to be conveyed towards the folding table; and in response to the lamination region being folded on the folding table, controlling the conveying component and/or the folding table to rotate around respective axis centers, such that a connection line distance between the conveying end and the folding start point that are on the same side of a connection line between the axis centers of the conveying component and the folding table is increased.

In the electrode sheet folding control method, during folding of the electrode sheet group, the conveying component is controlled to operate, so as to drive the electrode sheet group to move towards the folding table. When a lamination region which is being folded starts to appear or is already present on the folding table, at least one of the conveying component and the folding table is controlled to rotate around respective axis centers, such that a connection line distance between a conveying end of the conveying component and a folding start point of the lamination region on the folding table that are located on the same side is increased. In this way, a receding space can be provided for folding of the lamination region, thus facilitating stress release of the lamination region during folding, reducing a pulling force of a lamination region in a folded state on a lamination region in a non-folded state, and reducing a bending and warping degree of the lamination region at a folding position. In this case, a formed laminated structure has a reduced probability of abnormal gaps at the folding position, thus effectively reducing the probability of lithium precipitation of an electrode sheet at the folding position, and improving quality of a laminated battery.

In some embodiments, the step of controlling the conveying component and/or the folding table to rotate around respective axis centers comprises: controlling the conveying component and/or the folding table to rotate around the respective axis centers to continuously and periodically execute a rotation policy, the rotation policy comprising a first step and a second step; the first step comprises rotating away from an initial position of the conveying component or the folding table in a first direction, and rotating to the initial position in a second direction, and the second step comprises rotating away from the initial position in the second direction, and rotating to the initial position in the first direction, where the first direction is opposite to the second direction. In this way, during folding of the electrode sheet group, at least one of the conveying component and the folding table is controlled to periodically execute a rotation policy, so as to provide an effective receding space for a folding procedure of the lamination region, thus facilitating release of a force on the lamination region, reducing a bending and warping degree of the lamination region, and improving quality of the laminated battery.

In some embodiments, the step of executing the rotation policy comprises: controlling the folding table to perform the second step in a case in which the lamination region is folded in the first direction; and controlling the folding table to perform the first step in a case in which the lamination region is folded in the second direction. In this way, a direction in which the folding table starts to rotate is set to be opposite to a folding and bending direction of the lamination region, so that a connection line distance between the conveying end of the conveying component and the folding start point of the lamination region can be increased to increase a space between the conveying component and the folding table, thus facilitating stress release, reducing bending and warping at the folding position, and improving quality of the laminated battery.

In some embodiments, the step of executing the rotation policy comprises: controlling the conveying component to perform the first step in a case in which the lamination region is folded in the first direction; and controlling the conveying component to perform the second step in a case in which the lamination region is folded in the second direction. In this way, a direction in which the conveying component starts to rotate is set to be the same as the folding and bending direction of the lamination region, so that a connection line distance between the conveying end of the conveying component and the folding start point of the lamination region can be increased to increase a space between the conveying component and the folding table, thus facilitating stress release, reducing bending and warping at the folding position, and improving quality of the laminated battery.

In some embodiments, positions that the conveying component or the folding table passes through when rotating in any direction comprise the initial position and a limit position, and the limit position and the initial position are arranged at an acute angle therebetween. In this way, a rotation path of the conveying component or the folding table is set between the initial position and the limit position, so that back-and-forth rotation of the conveying component or the folding table can be associated with a folding action of the lamination region, thereby improving effective control on a folding process of the electrode sheet group.

In some embodiments, an angle between the limit position and the initial position is denoted as θ, and in a case in which one of the conveying component and the folding table is controlled to execute the rotation policy, 0° < θ ≤ 60°. In this way, the angle θ is controlled to be between 0° and 60°, which facilitates stress release of the electrode sheet group during folding and improves quality of the laminated battery, and also facilitates improvement of stability of the electrode sheet group on the folding table.

In some embodiments, a condition that θ further satisfies is: 15° ≤ θ ≤ 30°. In this way, a value of a rotation angle from the initial position to the limit position is further controlled to be between 15° and 30°, which facilitates more precise control on the folding procedure of the electrode sheet group, and can more effectively improve folding effects of the electrode sheet group.

In some embodiments, in a case in which the conveying component and/or the folding table rotate or rotates from the initial position to the limit position, a conveying displacement amount of the electrode sheet group by the conveying end of the conveying component is controlled to be a first displacement, and the ratio of the first displacement to the length of the lamination region is denoted as γ, where 0.3 ≤ γ ≤ 0.7. In this way, the ratio of the first displacement to the length of the lamination region is controlled to be between 0.3 and 0.7, so that the electrode sheet group is conveyed by at least 0.3 of the lamination region when the conveying component or the folding table rotates from the initial position to the limit position, which is beneficial to reducing bending and warping of the electrode sheet group at the folding position and improving quality of the laminated battery.

In some embodiments, a condition that γ further satisfies is: 0.3 ≤ γ ≤ 0.4. In this way, the ratio of the first displacement to the length of the lamination region is further controlled to be between 0.3 and 0.4, which is beneficial to further effectively controlling the folding procedure of the electrode sheet group, thereby making controllability of quality of the laminated battery better.

In some embodiments, the step of executing the rotation policy comprises: in a case in which the conveying component or the folding table rotates from the initial position to the limit position, controlling the conveying component or the folding table to rotate at a first angular velocity first and then rotate at a second angular velocity, where the first angular velocity is greater than the second angular velocity. In this way, the first angular velocity is controlled to be greater than the second angular velocity, so that the conveying component or the folding table translates faster at the beginning of folding, which is beneficial to quickly increasing a connection line distance between the conveying component and the folding table, and stress during folding is quickly released, which is convenient to further improving quality of the laminated battery.

In some embodiments, the ratio of the first angular velocity to the second angular velocity is denoted as β, and 1.5 ≤ β ≤ 2.5. In this way, the ratio of the first angular velocity to the second angular velocity is controlled to be between 1.5 and 2.5, which can increase an angular velocity in response to stress release during folding and improve folding effects, and can also effectively take into account the control on rotation of the conveying component or the folding table, so that the conveying component or the folding table rotates stably when executing the rotation policy.

In some embodiments, a condition that β further satisfies is: 1.8 ≤ β ≤ 2.2. In this way, the ratio of the first angular velocity to the second angular velocity is further controlled to be between 1.8 and 2.2, so that an angular velocity in response to stress release during folding is better, and rotation of the conveying component or the folding table can be more stably controlled.

In some embodiments, in a case in which the conveying component and/or the folding table have or has completed executing the rotation policy, the conveying displacement amount of the electrode sheet group by the conveying end of the conveying component is the length of at least two of the lamination regions. In this way, a cycle of the rotation policy is associated with a conveying cycle of the conveying component, so that folding quality of the electrode sheet group is more controllable, and consistency of the product is better.

In some embodiments, the step of executing the rotation policy comprises: controlling the conveying component and/or the folding table to move by a preset displacement amount in a direction away from each other each time the first step or the second step is completed. In this way, a space compressed due to the increase of a quantity of times of folding can be effectively compensated for, which facilitates folding of the electrode sheet group, and also facilitates stress release of the electrode sheet group during folding, thereby improving quality of the laminated battery.

In some embodiments, the ratio of the preset displacement amount to the thickness of the electrode sheet group in the lamination region is denoted as α, and 1 ≤ α ≤ 5. In this way, the ratio of the preset displacement amount to the thickness of the electrode sheet group in the lamination region is controlled to be between 1 and 5, which is convenient for the conveying component or the folding table to recede an appropriate displacement after folding, and leaves a reasonable space for the electrode sheet group between the conveying component and the folding table, so as to realize a stable and effective folding process.

In some embodiments, a condition that α further satisfies is: 2 ≤ α ≤ 3. In this way, a value of α is further controlled to be between 2 and 3, so that after each time of folding, a space between the conveying component and the folding table is controlled more properly, thereby making the folding process of the electrode sheet group on the folding table more stable.

In some embodiments, before the step of controlling the conveying component and/or the folding table to rotate around respective axis centers, the method further comprises: controlling the minimum spacing between the conveying end of the conveying component and a working surface of the folding table to be an initial spacing, where the ratio of the initial spacing to the length of the lamination region is denoted as λ, and 1.2 ≤ λ ≤ 2. In this way, the ratio of the initial spacing to the length of the lamination region is controlled to be between 1.2 and 2, so that there is a lamination region that can be suspended between the conveying component and the folding table, the folding process can be stably performed, and it is also beneficial to improve folding efficiency.

In some embodiments, a condition that λ further satisfies is: 1.3 ≤ λ ≤ 1.6. In this way, the ratio of the initial spacing to the length of the lamination region is further controlled to be between 1.3 and 1.6, which facilitates more precise control on folding of the electrode sheet group, and further improves stability and folding efficiency of the folding procedure.

In some embodiments, the step in response to the lamination region being folded on the folding table comprises: controlling the conveying displacement amount of the electrode sheet group by the conveying end of the conveying component to be a second displacement, where the ratio of the second displacement to the length of the lamination region is denoted as ε, and 2 ≤ ε ≤ 10. **In** this way, the conveying displacement amount of the electrode sheet group by the conveying end of the conveying component is controlled to be between 2 and 10, so that at least one of the lamination regions has been folded on the folding table, which is convenient for stress release of a folding lamination region, reduces bending and warping at the folding position, and improves quality of the laminated battery.

In some embodiments, a condition that ε further satisfies is: 2.1 ≤ ε ≤ 2.9. In this way, the conveying displacement amount of the electrode sheet group by the conveying end of the conveying component is further controlled to be between 2.1 and 2.9, which reduces a quantity of times of folding of the lamination region on the folding table before executing the rotation policy, is convenient for most of the folding procedure of the electrode sheet group to be improved by the rotation policy, and further improves quality of the laminated battery.

In a second aspect, the present application provides an electrode sheet folding control device, which adopts any one of the electrode sheet folding control methods. The electrode sheet folding control device comprises: a response module, configured to obtain a folding status of the lamination region on the folding table and feed back a signal; and an execution module, configured to control the conveying component to operate, and control the conveying component and/or the folding table to rotate around the respective axis centers according to the signal fed back by the response module.

In a third aspect, the present application provides an electrode sheet folding device. The electrode sheet folding device comprises: an electrode sheet folding mechanism, comprising a folding table and a conveying component for conveying an electrode sheet group and folding the electrode sheet group back and forth on the folding table; and a driving mechanism, configured to drive the conveying component and/or the folding table to rotate around respective axis centers.

In a fourth aspect, the present application provides a battery production system. The battery production system comprises the electrode sheet folding device mentioned above.

### DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.
FIG. 1 is a first schematic flowchart of an electrode sheet folding control method according to some embodiments of the present application;
FIG. 2 is a schematic diagram of a structure of an electrode sheet group during folding according to some embodiments of the present application;
FIG. 3 is a schematic diagram of a structure of an electrode sheet group bending at a folding position according to some embodiments of the present application;
FIG. 4 is a schematic diagram of a structure of a gap of a laminated structure at a folding position according to some embodiments of the present application;
FIG. 5 is a second schematic flowchart of an electrode sheet folding control method according to some embodiments of the present application;
FIG. 6 is a schematic diagram of a structure of an electrode sheet group during folding according to some embodiments of the present application, and (a) to (e) in FIG. 6 are respectively schematic diagrams of structures of an electrode sheet group at different steps during folding when a folding table executes a rotation policy according to some embodiments of the present application;
FIG. 7 is a third schematic flowchart of an electrode sheet folding control method according to some embodiments of the present application;
FIG. 8 is a fourth schematic flowchart of an electrode sheet folding control method according to some embodiments of the present application;
FIG. 9 is a schematic diagram of a structure of an electrode sheet group during folding according to some other embodiments of the present application, and (a) to (e) in FIG. 9 are respectively schematic diagrams of structures of an electrode sheet group at different steps during folding when a conveying component executes a rotation policy according to some other embodiments of the present application;
FIG. 10 is graph of specific rotation angle amplitudes of a folding table according to some embodiments of the present application;
FIG. 11 is a schematic diagram of a structure of an electrode sheet group in an electrode sheet folding mechanism before a rotation policy is executed according to some embodiments of the present application; and
FIG. 12 is a schematic diagram of a structure of an electrode sheet folding control device according to some embodiments of the present application.
100. Electrode sheet folding device; 10. Electrode sheet folding mechanism; 1a. First displacement; 1b. First axis center; 1c. Initial position; 1d. Preset displacement amount; 1e. Initial spacing; 1f. Gap; 1g. Limit position; 1h. Second axis center; 11. Conveying component; 111. First roller; 112. Second roller; 113. Conveying end; 12. Folding table; 121. Working surface; 20. Electrode sheet group; 21. Lamination region; 22. First electrode sheet; 23. Second electrode sheet; 24. Separator; 25. Folding position; 26. Folding start point; 30. Driving mechanism; X. Conveying direction; 200. Response module; 300. Execution module.

### DESCRIPTION OF EMBODIMENTS

In order to make the above objectives, features and advantages of the present application more apparent and understandable, specific implementations of the present application are described in detail below with reference to the accompanying drawings. In the following description, many specific details are set forth to fully understand the present application. However, the present application can be implemented in many other ways different from those described herein, and those skilled in the art may make similar improvements without departing from the meaning of the present application. Therefore, the present application is not limited by the specific embodiments disclosed below.

In the description of the present application, it should be understood that, if there are the terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", orientations or positional relationships indicated by the terms are based on orientations or positional relationships shown in the drawings, and are merely for convenience of description of the present application and simplified description, and do not indicate or imply that an indicated device or element must have a specific orientation or be configured and operated in a specific orientation, and thus should not be construed as limitations on the present application.

In addition, if there are the terms "first" and "second", the terms are only used for descriptive purposes, and should not be construed as indicating or implying relative importance or implicitly indicating the number of technical features indicated. Thus, a feature defined by "first" and "second" may explicitly or implicitly indicate that the feature is one or more. In the description of the present application, if there is the term "a plurality of", the meaning of "a plurality of" is two or more, such as two and three, unless otherwise specifically defined.

In the present application, unless explicitly specified and defined otherwise, the terms "mount", "couple", "connect", and "fasten" should be broadly understood. For example, they may be a fixed connection, a detachable connection, or an integral connection; or may be a mechanical connection, or an electrical connection; or may be a direct connection, or an indirect connection via an intermediate medium, or an internal communication between two elements or interaction between two elements, unless explicitly specified otherwise. A person skilled in the art can understand specific meanings of these terms in the present application according to specific situations.

In the present application, unless explicitly specified and defined otherwise, if there are similar descriptions that a first feature being "above" or "below" a second feature, the meaning may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

It should be noted that, if an element is referred to as being "fixed on" or "disposed on" another element, it may be directly on another element or there may be an intermediate element. If an element is referred to as being "connected to" another element, it can be directly connected to another element or there may be an intermediate element. If present, the terms "vertical", "horizontal", "upper", "lower", "left", "right" and similar expressions used in the present application are merely for the purpose of description, and do not represent the only implementation.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

In a battery, an electrode assembly, which is a component in which electrochemical reactions occur, is generally formed by laminating a positive electrode sheet, a separator, and a negative electrode sheet. During a lamination procedure, an electrode sheet group formed by the negative electrode sheet, the separator, and the positive electrode sheet that are laminated may be folded according to a Z-shaped structure, for example, a lamination region on the electrode sheet group is folded on a folding table in a right bending direction; after folding, a lamination region connected to the lamination region is folded in a left bending direction; and then the folding is sequentially repeated to form a Z-shaped laminated structure. A laminated battery formed in a conventional folding manner generally has a problem of lithium precipitation at a folding position of an electrode sheet, resulting in a decrease in quality of the laminated battery.

Based on this, in order to effectively alleviate a problem that a laminated structure formed in a conventional folding manner is prone to lithium precipitation at the folding position, the present application provides an electrode sheet folding control method, which controls, during folding of an electrode sheet group, a conveying component to operate, so as to drive the electrode sheet group to move towards a folding table. When a lamination region which is being folded starts to appear or is already present on the folding table, at least one of the conveying component and the folding table is controlled to rotate around respective axis centers, such that a connection line distance between a conveying end of the conveying component and a folding start point of the lamination region on the folding table that are located on the same side is increased. In this way, a receding space can be provided for folding of the lamination region, thus facilitating stress release of the lamination region during folding, reducing a pulling force of a lamination region in a folded state on a lamination region in a non-folded state, and reducing a bending and warping degree of the lamination region at a folding position. In this case, a formed laminated structure has a reduced probability of abnormal gaps at the folding position, thus effectively reducing the probability of lithium precipitation of an electrode sheet at the folding position, and improving quality of a laminated battery.

In some embodiments of the present application, an electrode assembly is a component in which electrochemical reactions occur in a battery, and is mainly formed by laminating a positive electrode sheet and a negative electrode sheet, and a separator is generally disposed between the positive electrode sheet and the negative electrode sheet. Parts of the positive electrode sheet and the negative electrode sheet with an active material constitute a main body of the electrode assembly, and parts of the positive electrode sheet and the negative electrode sheet with no active material each constitutes a tab. The positive electrode tab and negative electrode tab may both be located at one end of the main body portion or be located at two ends of the main body portion respectively. During charge-discharge of a battery, a positive electrode active substance and a negative electrode active substance react with the electrolyte, and the tab is connected to an electrode terminal to form a current circuit.

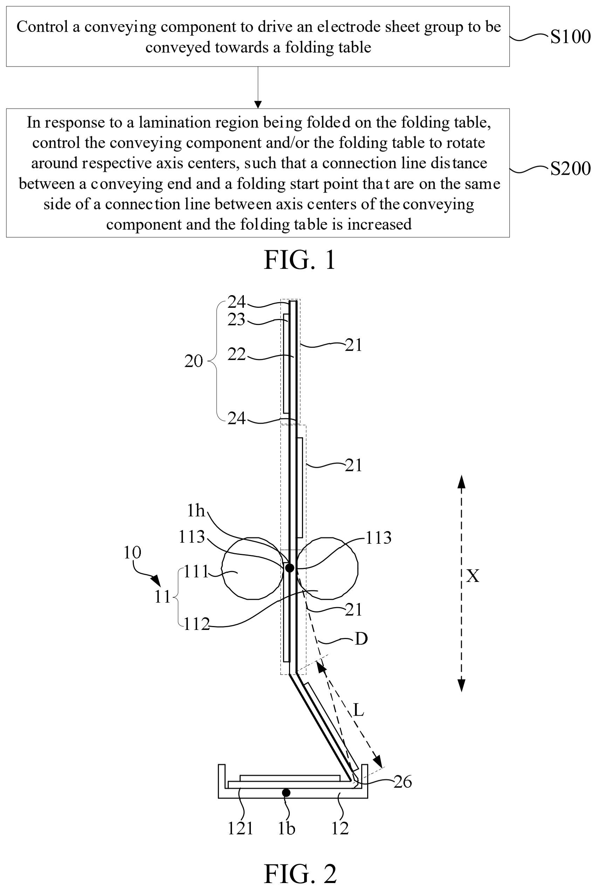

According to some embodiments of the present application, referring to FIG. 1 and FIG. 2, the present application provides an electrode sheet folding control method. An electrode sheet folding mechanism 10 includes a folding table 12 and a conveying component 11 for conveying an electrode sheet group 20. The electrode sheet group 20 has several lamination regions 21 in a length direction of the electrode sheet group, the lamination region 21 has a folding start point 26 on the folding table 12, and the conveying component 11 includes a first roller 111 and a second roller 112 located on both sides of the electrode sheet group 20. An end of the first roller 111 and an end of the second roller 112 separately in contact with the electrode sheet group 20 are both conveying ends 113, and the axis center of the conveying component 11 is located on a connection line between the two conveying ends 113. The electrode sheet folding control method includes the following steps:
S100: Controlling the conveying component 11 to drive the electrode sheet group 20 to be conveyed towards the folding table 12.
S200: In response to the lamination region 21 being folded on the folding table 12, controlling the conveying component 11 and/or the folding table 12 to rotate around respective axis centers, such that a connection line distance between the conveying end 113 and the folding start point 26 that are on the same side of a connection line between the axis centers of the conveying component 11 and the folding table 12 is increased.

The electrode sheet folding mechanism 10 refers to an apparatus capable of folding the electrode sheet group 20 back and forth on the folding table 12 in a Z shape; and the electrode sheet group 20 refers to a combined structure formed by laminating a first electrode sheet 22, a separator 24, and a second electrode sheet 23. In order to enable the electrode sheet group 20 to be continuously folded back and forth in a Z shape to form a laminated structure, the electrode sheet group 20 has several continuous and foldable lamination regions 21 in a length direction of the electrode sheet group 20, and there is a crease between two adjacent lamination regions 21. The crease may be provided on one side face of the electrode sheet group 20, or may be provided on two opposite side faces of the electrode sheet group 20, that is, double-sided creases. Certainly, the concept of the lamination region 21 may also be defined by the crease on the electrode sheet group 20, for example, in a length direction of the electrode sheet group 20, a region between two adjacent creases is a lamination region 21. In addition, it should be explained that folding of the lamination region 21 is essentially folding of a corresponding portion of the electrode sheet group 20 in the lamination region 21. For ease of description, the folding is briefly described as folding of the lamination region 21 in the specification.

In order to satisfy back-and-forth folding (which may also be understood as a left-right folding) of each lamination region 21, the first electrode sheet 22 and the separator 24 may be designed as a continuous strip-shaped structure, and the second electrode sheet 23 may be die-cut into structures with a size meeting requirements, which are respectively arranged in each lamination region 21 in a one-to-one correspondence. In addition, in two adjacent lamination regions 21, the two second electrode sheets 23 are respectively located on different sides of the electrode sheet group 20. The first electrode sheet 22 may be a negative electrode sheet, and the second electrode sheet 23 may be a positive electrode sheet.

The conveying component 11 refers to an apparatus that provides conveying power for the electrode sheet group 20, and may be a roller structure. For example, the conveying component 11 may include a first roller 111 and a second roller 112 that cooperate with each other, and the electrode sheet group 20 is clamped between the first roller 111 and the second roller 112. In this case, the conveying end 113 of the conveying component 11 acting on the electrode sheet group 20 may be understood as an end of the first roller 111 or the second roller 112 in contact with the electrode sheet group 20. Certainly, in some embodiments, the conveying end 113 of the conveying component 11 may also be determined by connecting the centers of the first roller 111 and the second roller 112, and an intersection point of the connection line and the first roller 111 or the second roller 112 may also be regarded as the conveying end 113 of the conveying component 11. The folding start point 26 of the lamination region 21 on the folding table 12 refers to an end of the lamination region 21 starting to be folded on the folding table 12.

The folding table 12 refers to a structure for supporting the laminated structure and providing a supporting force for the folding procedure. For example, during folding, the conveying component 11 moves the electrode sheet group 20 towards the folding table 12, so that an end of the lamination region 21 is in contact with a working surface 121 of the folding table 12; and as the conveying continues, an end of the lamination region 21 gradually bends and fits towards the working surface 121 with the folding start point 26 on the working surface 121 as a folding point.

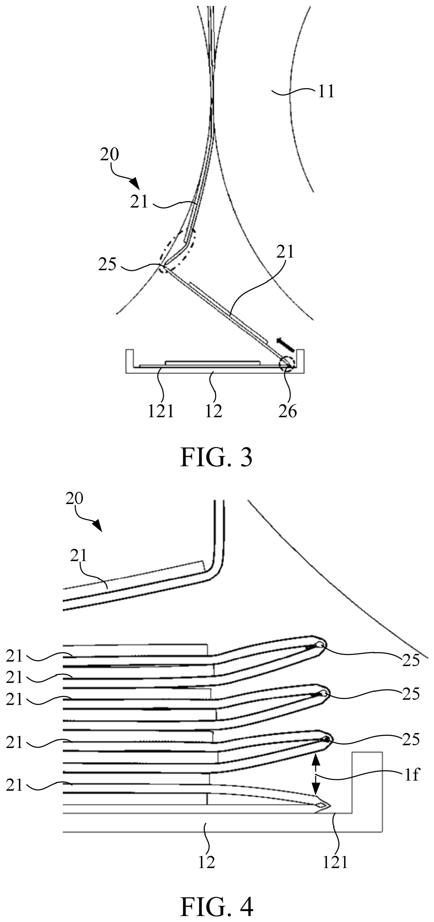

When an end of the lamination region 21 is folded with the folding start point 26 as a folding point, an end of the lamination region 21 is subjected to a pulling force on the folding table 12, which causes an end of a lamination region 21 adjacent to the lamination region 21 to bend and warp under the force. For example, in some embodiments, referring to FIG. 3, when one lamination region 21 is folded, the lamination region 21 is subjected to a pulling force at the folding start point 26, and the pulling force is transmitted through the lamination region 21 to a lamination region 21 adjacent thereto, causing an end of a lamination region 21 in a non-folded state to bend. The bending and warping causes an abnormal gap 1f between two adjacent folding positions 25, for example, the gap 1f is too large, specifically referring to FIG. 4, which causes poor electrolyte wettability and weak lithium ion dynamics, thereby causing the folding position 25 to be prone to lithium precipitation.

In this case, if the connection line distance between the folding start point 26 and the conveying end 113 that are on the same side is increased, the pulling force of the working surface 121 on the lamination region 21 is weakened, and a bending and warping degree of a lamination region 21 in a non-folded state adjacent to the lamination region 21 is also reduced. It should be noted that if the conveying component 11 rotates around the axis center of the conveying component 11, a conveying end 113 on one side moves towards the folding table 12, and a conveying end 113 on the other side moves away from the folding table 12. Therefore, when the conveying component 11 is controlled to rotate, the conveying end 113 and the folding start point 26 on this side should be located on the same side of a connection line of axis centers of the conveying component 11 and the folding table 12, and a connection line distance between the conveying end 113 and the folding start point 26 is increased. For the connection line of axis centers of the conveying component 11 and the folding table 12, reference may be made to FIG. 2, and the "connection line of axis centers" is the connection line between 1h and 1b in FIG. 2.

In step S200, for a timing for driving at least one of the conveying component 11 and the folding table 12 to rotate, it is determined whether there is a lamination region 21 being folded on the folding table 12. If there is no lamination region 21 being folded, there is no bending at an end of the lamination region 21, and thus there is no need to drive the conveying component 11 and/or the folding table 12 to rotate around respective axis centers.

It is not difficult to understand that, in order to enable the lamination region 21 to be folded on the folding table 12, an acute angle should be set between the lamination region 21 and the working surface 121 of the folding table 12 at initial contact between the folding start point 26 of the lamination region 21 and the folding table 12. In this way, the laminating region 21 can be stably folded on the folding table 12 by means of a conveying force of the conveying component 11. For this purpose, if the connection line distance between the conveying end 113 of the conveying component 11 and the folding start point 26 of the lamination region 21 is to be increased by means of rotation, a rotation direction of the folding table 12 should be opposite to a folding and bending direction of the lamination region 21; or a rotation direction of the conveying component 11 should be the same as a folding and bending direction of the lamination region 21.

For ease of understanding, taking FIG. 2 as an example, when the lamination region 21 is bent and folded counterclockwise, the folding table 12 should rotate clockwise around a first axis center 1b, or the conveying component 11 should rotate counterclockwise around a second axis center 1h. When the lamination region 21 is bent and folded clockwise, the folding table 12 should rotate counterclockwise around the first axis center 1b, or the conveying component 11 should rotate clockwise around the second axis center 1h.

The first axis center 1b and the second axis center 1h are axis centers of the folding table 12 and the conveying component 11 respectively, and the first axis center 1b and the second axis center 1h are disposed opposite to each other in a conveying direction X of the electrode sheet group 20, for example, a position of an orthographic projection of the second axis center 1h on the folding table 12 may overlap with the first axis center 1b. In addition, during folding, the folding start point 26 of the lamination region 21 is located on a side of the first axis center 1b. Specifically, in some embodiments, the first axis center 1b is located at the center of the folding table 12, and the second axis center 1h is located at the center of the conveying component 11, for example, the second axis center 1h is located between the first roller 111 and the second roller 112.

It should be noted that, in the embodiments of the present application, the description that "the connection line distance is increased" does not mean that the connection line distance is increased all the time during rotation of the conveying component 11 or the folding table 12, but when the conveying component 11 or the folding table 12 rotates, the connection line distance between the conveying end 113 of the conveying component 11 and the folding start point 26 of the lamination region 21 on the folding table 12 is increased within a period of time. For example, as the conveying component 11 or the folding table 12 rotates, the connection line distance between the conveying end 113 of the conveying component 11 and the folding start point 26 of the lamination region 21 may periodically exhibit a rule of first increasing and then decreasing. In addition, for ease of understanding of the "connection line distance", reference may be made to FIG. 2, and the connection line distance between the conveying end 113 of the conveying component 11 and the folding start point 26 of the lamination region 21 on the folding table 12 that are on the same side may be a distance represented by D in FIG. 2.

With such a design, a receding space can be provided for folding of the lamination region 21, thus facilitating stress release of the lamination region 21 during folding, reducing a pulling force of a lamination region 21 in a folded state on a lamination region 21 in a non-folded state, and reducing a bending and warping degree of the lamination region 21 at the folding position 25. In this case, a formed laminated structure has a reduced probability of abnormal gaps 1f at the folding position 25, thus effectively reducing the probability of lithium precipitation of an electrode sheet at the folding position 25, and improving quality of a laminated battery.

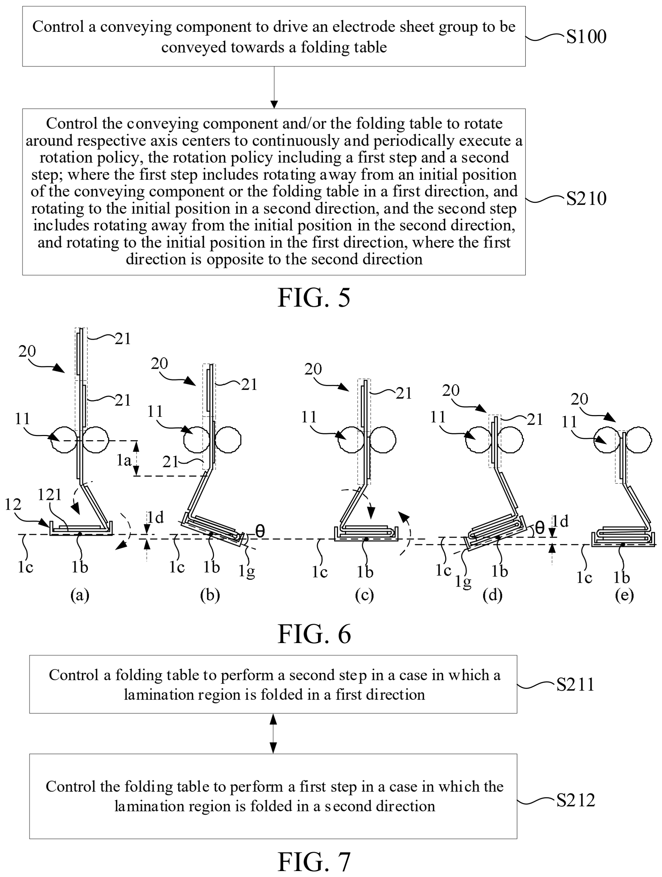

According to some embodiments of the present application, referring to FIG. 5, the step S200 of controlling the conveying component 11 and/or the folding table 12 to rotate around respective axis centers includes:

S210: Controlling the conveying component 11 and/or the folding table 12 to rotate around the respective axis centers to continuously and periodically execute a rotation policy, the rotation policy including a first step and a second step; where the first step includes rotating away from an initial position 1c of the conveying component 11 or the folding table 12 in a first direction, and rotating to the initial position 1c in a second direction, and the second step includes rotating away from the initial position 1c in the second direction, and rotating to the initial position 1c in the first direction, where the first direction is opposite to the second direction.

Executing a rotation policy continuously and periodically means that when the conveying component 11 or the folding table 12 completes one rotation policy, another rotation policy is executed immediately thereafter, and this procedure is cyclically repeated.

A rotation policy refers to performing the first step and the second step in one cycle. A sequence of performing the first step and the second step is not limited, for example, the first step and the second step may be performed sequentially, or the second step may be performed first and then the first step is performed. If the conveying component 11 and the folding table 12 are controlled to execute a rotation policy at the same time, the conveying component 11 and the folding table 12 respectively execute different steps in the rotation policy, for example, when the folding table 12 performs the first step, the conveying component 11 performs the second step. The first direction may be clockwise and the second direction is counterclockwise; or the first direction may be counterclockwise and the second direction may be clockwise. Certainly, when a rotation policy is executed, a back-and-forth cycle of the conveying component 11 and a back-and-forth cycle of the folding table 12 are the same.

The initial position 1c refers to a position of the conveying component 11 or the folding table 12 when a rotation policy is not executed, and for the convenience of identification of the initial position 1c, a horizontal position of the folding table 12 or the conveying component 11 may be used as the initial position 1c.

When the lamination region 21 is folded on the folding table 12, the folding table 12 being controlled to execute a rotation policy is used as an example. Referring to FIG. 6, (a) in FIG. 6 is a schematic diagram of a structure of the electrode sheet group 20 during folding when the folding table 12 does not execute a rotation policy according to some embodiments of the present application; (b) in FIG. 6 is a schematic diagram of a structure of the electrode sheet group 20 during folding when the folding table 12 rotates clockwise to the limit position 1g according to some embodiments of the present application; (c) in FIG. 6 is a schematic diagram of a structure of the electrode sheet group 20 during folding when the folding table 12 returns to the initial position 1c according to some embodiments of the present application; (d) in FIG. 6 is a schematic diagram of a structure of the electrode sheet group 20 during folding when the folding table 12 rotates counterclockwise to the limit position 1g according to some embodiments of the present application; and (e) in FIG. 6 is a schematic diagram of a structure of the electrode sheet group 20 during folding when the folding table 12 returns to the initial position 1c according to some embodiments of the present application. The folding table 12 is first driven to rotate clockwise away from the initial position 1c to the limit position 1g, and a distance between the conveying component 11 and the folding table 12 is increased to provide a receding space for folding of the lamination region 21, which facilitates release of a pulling force on the lamination region 21 and reduces a bending and warping degree of an end of the lamination region 21. Next, the folding table 12 is driven to rotate counterclockwise to return to the initial position 1c, so that the lamination region 21 is completely folded on the folding table 12; then the folding table 12 is driven to rotate counterclockwise away from the initial position 1c to increase the distance between the conveying component 11 and the folding table 12; and finally, the folding table 12 is driven to rotate clockwise to return to the initial position 1c, so that another lamination region 21 is also completely folded on the folding table 12. The limit position 1g refers to the farthest position that the conveying component 11 can reach when rotating away from the initial position 1c.

In order to further improve folding effects, a rotation policy may be controlled to be executed when folding of the lamination region 21 on the folding table 12 is just started, or in other words, to be executed when a folding action of the previous lamination region 21 is just completed. In addition, a rotation policy may be controlled to end when the lamination region 21 is completely folded on the folding table 12.

With such a design, during folding of the electrode sheet group 20, at least one of the conveying component 11 and the folding table 12 is controlled to periodically execute a rotation policy, so as to provide an effective receding space for a folding procedure of the lamination region 21, thus facilitating release of stress on the lamination region 21, reducing a bending and warping degree of the lamination region 21, and improving quality of the laminated battery.

According to some embodiments of the present application, referring to FIG. 7, the step of executing the rotation policy includes:
S211: controlling the folding table 12 to perform the second step in a case in which the lamination region 21 is folded in the first direction; and
S212: controlling the folding table 12 to perform the first step in a case in which the lamination region 21 is folded in the second direction.

The first direction and the second direction refer to opposite sides of the initial position 1c in a preset direction respectively. For ease of understanding, a figure is used as an example for description. The first direction may be the counterclockwise direction in FIG. 6, and the second direction may be the clockwise direction in FIG. 6. When the lamination region 21 rotates and is folded in the counterclockwise direction on the folding table 12, the folding table 12 performs the second step, for example, the folding table 12 first rotates clockwise away from the initial position 1c to a position, and then returns from the position to the initial position 1c. When the lamination region 21 rotates and is folded in the clockwise direction on the folding table 12, the folding table 12 performs the first step, first rotating counterclockwise away from the initial position 1c to a position, and then returning from the position to the initial position 1c.

In this way, a direction in which the folding table 12 starts to rotate is set to be opposite to a folding and bending direction of the lamination region 21, so that a connection line distance between the conveying end 113 of the conveying component 11 and the folding start point 26 of the lamination region 21 can be increased to increase a space between the conveying component 11 and the folding table 12, thus facilitating stress release, reducing bending and warping at the folding position 25, and improving quality of the laminated battery.

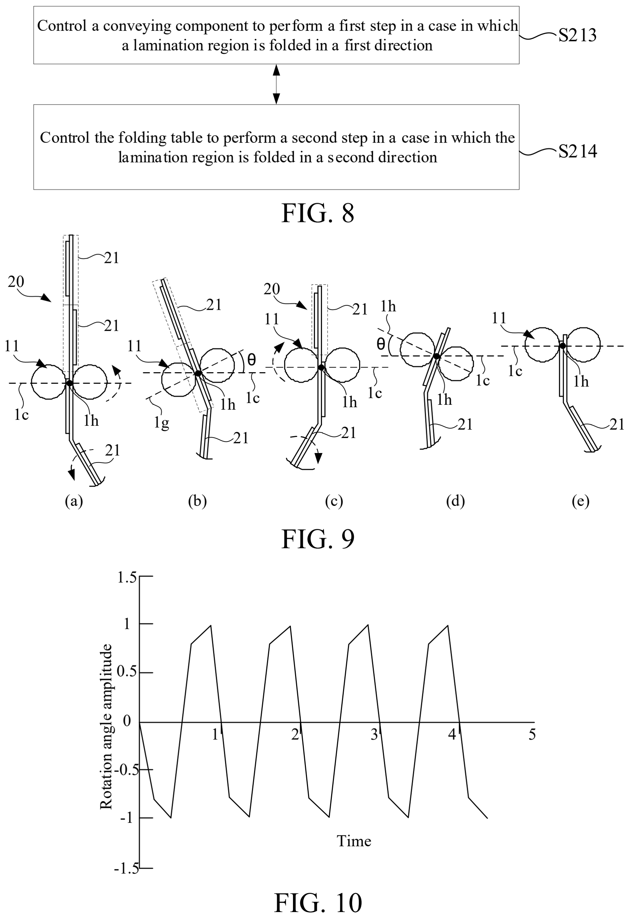

According to some embodiments of the present application, referring to FIG. 8, the step of executing the rotation policy includes:
S213: controlling the conveying component 11 to perform the first step in a case in which the lamination region 21 is folded in the first direction; and
S214: controlling the conveying component 11 to perform the second step in a case in which the lamination region 21 is folded in the second direction.

For ease of understanding, FIG. 9 is used as an example for description. The first direction may be the counterclockwise direction in FIG. 9, and the second direction may be the clockwise direction in FIG. 9. (a) in FIG. 9 is a schematic diagram of a structure of the electrode sheet group 20 during folding when the conveying component 11 does not execute a rotation policy according to some embodiments of the present application; (b) in FIG. 9 is a schematic diagram of a structure of the electrode sheet group 20 during folding when the conveying component 11 rotates counterclockwise to the limit position 1g according to some embodiments of the present application; (c) in FIG. 9 is a schematic diagram of a structure of the electrode sheet group 20 during folding when the conveying component 11 returns to the initial position 1c according to some embodiments of the present application; (d) in FIG. 9 is a schematic diagram of a structure of the electrode sheet group 20 during folding when the conveying component 11 rotates clockwise to the limit position 1g according to some embodiments of the present application; and (e) in FIG. 9 is a schematic diagram of a structure of the electrode sheet group 20 during folding when the conveying component 11 returns to the initial position 1c according to some embodiments of the present application.

When the lamination region 21 rotates and is folded in the counterclockwise direction on the folding table 12, the conveying component 11 performs the first step, for example, the conveying component 11 first rotates counterclockwise away from the initial position 1c to a position, and then returns from the position to the initial position 1c. When the lamination region 21 rotates and is folded in the clockwise direction on the folding table 12, the conveying component 11 performs the second step, first rotating clockwise away from the initial position 1c to a position, and then returning from the position to the initial position 1c.

In this way, a direction in which the conveying component 11 starts to rotate is set to be the same as a folding and bending direction of the lamination region 21, so that a connection line distance between the conveying end 113 of the conveying component 11 and the folding start point 26 of the lamination region 21 can be increased to increase a space between the conveying component 11 and the folding table 12, thus facilitating stress release, reducing bending and warping at the folding position 25, and improving quality of the laminated battery.

According to some embodiments of the present application, positions that the conveying component 11 or the folding table 12 passes through when rotating in any direction include the initial position 1c and the limit position 1g, and the limit position 1g and the initial position 1c are arranged at an acute angle therebetween.

The limit position 1g refers to the farthest region that the conveying component 11 or the folding table 12 can reach when rotating away from the initial position 1c. When the conveying component 11 or the folding table 12 starts to execute a rotation policy, the conveying component 11 or the folding table 12 starts to rotate from the initial position 1c to the limit position 1g, and then returns from the limit position 1g to the initial position 1c. In addition, in some embodiments, when the conveying component 11 or the folding table 12 rotates to the limit position 1g, the lamination region 21 laminated on the folding table 12 and a lamination region 21 adjacent to the lamination region 21 may be substantially designed to be vertical, for example, the angle between the two lamination regions 21 may be 80° to 90°.

If the conveying component 11 or the folding table 12 completes one back-and-forth rotation between the initial position 1c and the limit position 1g, folding of exactly one lamination region 21 can be completed on the folding table 12. In this case, movement of the conveying component 11 or the folding table 12 may have different corresponding relationships with a folding action of the lamination region 21. For example, when the conveying component 11 or the folding table 12 rotates from the initial position 1c to the limit position 1g, the lamination region 21 may complete half of a folding amount, or complete less than or more than half of a folding amount.

To facilitate quantifying a folding amount of the lamination region 21, a conveying amount at the conveying end 113 of the conveying component 11 may be used. For example, when the conveying component 11 or the folding table 12 rotates from the initial position 1c to the limit position 1g, a conveying amount of the conveying end 113 of the conveying component 11 to the electrode sheet group 20 may be half of the length of the lamination region 21, or less than or more than half of the length of the lamination region 21; and the remaining length of the lamination region 21 corresponds to the rotation from the limit position 1g to the initial position 1c. In order to facilitate understanding of the length of the lamination region 21, FIG. 2 is used as an example, and the length of the lamination region 21 may be a dimension represented by L in FIG. 2.

A rotation path of the conveying component 11 or the folding table 12 is set between the initial position 1c and the limit position 1g, so that a back-and-forth rotation of the conveying component 11 or the folding table 12 can be associated with a folding action of the lamination region 21, thereby improving effective control on a folding process of the electrode sheet group 20.

According to some embodiments of the present application, referring to FIG. 6, an angle between the limit position 1g and the initial position 1c is denoted as θ, and in a case in which one of the conveying component 11 and the folding table 12 is controlled to execute the rotation policy, 0° < θ ≤ 60°.

It should be noted that, if both the conveying component 11 and the folding table 12 are controlled to execute the rotation policy, the sum of angles of the conveying component 11 and the folding table 12 respectively from the initial position 1c to the limit position 1g is twice the angle θ, and thus, in this case, a value range of the angle θ may be correspondingly reduced.

A magnitude of the angle θ affects the connection line distance between the conveying end 113 of the conveying component 11 and the folding start point 26 of the lamination region 21. For example, if the angle θ is excessively large, the connection line distance between the conveying end 113 of the conveying component 11 and the folding start point 26 of the lamination region 21 is excessively large, which causes two or more lamination regions 21 to be suspended between the conveying component 11 and the folding table 12, thereby deteriorating folding effects of the electrode sheet group 20, and also causes a folded lamination region 21 to slip on the folding table 12 due to an excessively large inclination angle.

Therefore, a value of the angle θ is controlled to be between 0° and 60°. For example, the value of the angle θ may be, but is not limited to, 10°, 20°, 30°, 40°, 50°, or 60°.

The angle θ is controlled to be between 0° and 60°, which facilitates stress release of the electrode sheet group 20 during folding and improves quality of the laminated battery, and also facilitates improvement of the stability of the electrode sheet group 20 on the folding table 12.

In some embodiments, a condition that θ further satisfies is: 15° ≤ θ ≤ 30°.

A value of θ may also be controlled to be between 15° and 30°, for example, the value of θ may be, but is not limited to, 15°, 17°, 20°, 22°, 25°, 27°, 28°, or 30°.

A value of a rotation angle from the initial position 1c to the limit position 1g is further controlled to be between 15° and 30°, which facilitates more precise control on the folding procedure of the electrode sheet group 20 and can more effectively improve folding effects of the electrode sheet group 20.

According to some embodiments of the present application, referring to FIG. 6, in a case in which the conveying component 11 and/or the folding table 12 rotate or rotates from the initial position 1c to the limit position 1g, the conveying displacement amount of the electrode sheet group 20 by the conveying end 113 of the conveying component 11 is controlled to be a first displacement 1a, and the ratio of the first displacement 1a to the length of the lamination region 21 is denoted as γ, where 0.3 ≤ γ ≤ 0.7.

It is not difficult to understand that, because the conveying component 11 is always in a working state during folding, when the conveying component 11 or the folding table 12 rotates from the initial position 1c to the limit position 1g, the conveying end 113 of the conveying component 11 also drives the electrode sheet group 20 to be conveyed towards a side of the folding table 12. In this case, when the conveying component 11 or the folding table 12 rotates to the limit position 1g, a conveying amount of the electrode sheet group 20 corresponds to the first displacement 1a.

In addition, when the conveying component 11 or the folding table 12 starts to perform the first step in the rotation policy, that is, when the conveying component 11 or the folding table 12 starts to rotate from the initial position 1c towards the limit position 1g, one of the lamination regions 21 may be controlled to just start to be folded on the folding table 12 or to be folded on the folding table 12 for a short time.

γ may take a value between 0.3 and 0.7. For example, γ may be, but is not limited to, 0.3, 0.4, 0.5, 0.6, or 0.7. When γ is 0.5, it indicates that the conveying component 11 conveys the electrode sheet group 20 by half of the lamination region 21. If an example in which executing one rotation policy corresponds to the conveying component 11 conveying the electrode sheet group 20 by two lamination regions 21 is used, during execution of the rotation policy, when rotating from the initial position 1c to the limit position 1g, the conveying component 11 correspondingly conveys the electrode sheet group 20 by half of the two lamination regions 21; and when returning from the limit position 1g to the initial position 1c, the conveying component 11 correspondingly conveys the electrode sheet group 20 by the other half of the two lamination regions 21.

The ratio of the first displacement 1a to the length of the lamination region 21 is controlled to be between 0.3 and 0.7, so that the electrode sheet group 20 is conveyed by at least 0.3 of the lamination region 21 when the conveying component 11 or the folding table 12 rotates from the initial position 1c to the limit position 1g, which is beneficial to reducing bending and warping of the electrode sheet group 20 at the folding position 25 and improving quality of the laminated battery.

According to some embodiments of the present application, a condition that γ further satisfies is: 0.3 ≤ γ ≤ 0.4.

γ may take a value between 0.3 and 0.4. For example, γ may be, but is not limited to, 0.3, 0.31, 0.32, 0.33, 0.34, 0.35, 0.36, 0.37, 0.38, 0.39, or 0.4.

The ratio of the first displacement 1a to the length of the lamination region 21 is further controlled to be between 0.3 and 0.4, which is beneficial to further effectively controlling the folding procedure of the electrode sheet group 20, thereby making controllability of quality of the laminated battery better.

According to some embodiments of the present application, the step of executing the rotation policy includes: in a case in which the conveying component 11 or the folding table 12 rotates from the initial position 1c to the limit position 1g, controlling the conveying component 11 or the folding table 12 to rotate at a first angular velocity first and then rotate at a second angular velocity, where the first angular velocity is greater than the second angular velocity.

When the conveying component 11 or the folding table 12 rotates from the initial position 1c to the limit position 1g, an angular velocity of the conveying component 11 or the folding table 12 is classified into two phases, that is, the conveying component 11 or the folding table 12 rotates at the first angular velocity first, and then rotates at the second angular velocity relatively slowly to the limit position 1g. Considering that most of timings that the lamination region 21 is prone to bending and warping during folding are concentrated on the time when the lamination region 21 is just folded, in this embodiment, the first angular velocity is controlled to be greater than the second angular velocity, so that the conveying component 11 or the folding table 12 can rotate at a relatively large angular velocity, and a connection line distance between the conveying component 11 and the folding table 12 can be quickly increased, and an angular velocity in response to stress release is larger.

When the conveying component 11 or the folding table 12 rotates at the first angular velocity and when the conveying component 11 or the folding table 12 rotates at the second angular velocity between the initial position 1c and the limit position 1g may be determined according to the actual folding procedure. For example, the conveying component 11 or the folding table 12 rotates at the first angular velocity in 1/3 to 1/2 of an entire time period, and rotates at the second angular velocity in the remaining time period. The entire time period described above refers to the time taken for the conveying component 11 or the folding table 12 to rotate from the initial position 1c to the limit position 1g.

In order to facilitate intuitive understanding of a rotation trajectory of the folding table 12, an angle value between the initial position 1c and the limit position 1g may be assigned 1, and in this case, for a specific rotation angle amplitude curve of the folding table 12, reference may be made to FIG. 10. It can be seen that, on one side of the initial position 1c, the folding table 12 first rotates from the initial position 1c by a distance at the first angular velocity, then rotates to the limit position 1g at the second angular velocity, and then returns to the initial position 1c at a uniform speed; and next, on the other side of the initial position 1c, the folding table 12 rotates from the initial position 1c by a distance at the first angular velocity, then rotates to the limit position 1g at the second angular velocity, and finally returns to the initial position 1c at a uniform speed. In this way, one rotation policy is completed.

The first angular velocity is controlled to be greater than the second angular velocity, so that the conveying component 11 or the folding table 12 translates faster at the beginning of folding, which is beneficial to quickly increasing a connection line distance between the conveying component 11 and the folding table 12, and stress during folding is quickly released, which is convenient to further improving quality of the laminated battery.

According to some embodiments of the present application, the ratio of the first angular velocity to the second angular velocity is denoted as β, and 1.5 ≤ β ≤ 2.5.

The ratio between the first angular velocity and the second angular velocity should be properly designed. If the first angular velocity differs slightly from the second angular velocity, because a total angle value is unchanged, that is, an angle between the initial position 1c and the limit position 1g is determined, if the two angular velocities differs slightly from each other, the connection line distance between the conveying component 11 and the folding table 12 cannot be quickly increased during early rotation, and an angular velocity in response to stress release is relatively small. If the first angular velocity differs excessively from the second angular velocity, the conveying component 11 or the folding table 12 needs to be switched between two angular velocities with a large difference, which is disadvantageous to stability of control.

Therefore, the ratio of the first angular velocity to the second angular velocity may be controlled to be between 1.5 and 2.5, for example, β may be, but is not limited to, 1.5, 1.6, 1.7, 1.8, 1.9, 2.0, 2.1, 2.2, 2.3, 2.4, or 2.5.

The ratio of the first angular velocity to the second angular velocity is controlled to be between 1.5 and 2.5, which can increase an angular velocity in response to stress release during folding and improve folding effects, and can also effectively take into account the control on rotation of the conveying component 11 or the folding table 12, so that the conveying component 11 or the folding table 12 rotates stably when executing the rotation policy.

According to some embodiments of the present application, a condition that β further satisfies is: 1.8 ≤ β ≤ 2.2.

The ratio of the first angular velocity to the second angular velocity may also be controlled to be between 1.8 and 2.2, for example, β may be, but is not limited to, 1.8, 1.9, 2.0, 2.1, or 2.2.

In this way, the ratio of the first angular velocity to the second angular velocity is further controlled to be between 1.8 and 2.2, so that an angular velocity in response to stress release during folding is better, and rotation of the conveying component 11 or the folding table 12 can be more stably controlled.

According to some embodiments of the present application, in a case in which the conveying component 11 and/or the folding table 12 have or has completed executing the rotation policy, the conveying displacement amount of the electrode sheet group 20 by the conveying end 113 of the conveying component 11 is the length of at least two of the lamination regions 21.

When the conveying component 11 and/or the folding table 12 have or has completed executing the rotation policy, the conveying component 11 may output two lamination regions 21, or may output three or more lamination regions 21. Specifically, in some embodiments, in a case in which the conveying component 11 and/or the folding table 12 have or has completed executing the rotation policy, the conveying displacement amount of the electrode sheet group 20 by the conveying end 113 of the conveying component 11 is the length of two lamination regions 21. In addition, when the conveying component 11 or the folding table 12 has completed executing the first step or the second step, the conveying displacement amount of the electrode sheet group 20 by the conveying end 113 of the conveying component 11 is the length of one lamination region 21.

In this way, a cycle of the rotation policy is associated with a conveying cycle of the conveying component 11, so that folding quality of the electrode sheet group 20 is more controllable, and consistency of the product is better.

According to some embodiments of the present application, referring to FIG. 6, the step of executing the rotation policy includes: controlling the conveying component 11 and/or the folding table 12 to move by a preset displacement amount 1d in a direction away from each other each time the first step or the second step is completed.

Considering that as the folding continues, a quantity of lamination regions 21 on the folding table 12 increases, and a spacing between the folding table 12 and the conveying component 11 decreases accordingly, and thus a folding space of the lamination region 21 is gradually compressed. Therefore, when the conveying component 11 and/or the folding table 12 are or is executing a rotation policy, the conveying component 11 and/or the folding table 12 are or is controlled to move by the preset displacement 1d in the direction away from each other, which may increase the spacing between the conveying component 11 and the folding table 12 to partially or entirely compensate for the space between the conveying component 11 and the folding table 12 that is compressed due to the increase of the folding thickness, so that the folding process runs stably. The expression "away from each other" means that the conveying component 11 and the folding table 12 are away from each other.

In addition, there are a plurality of control manners for controlling the conveying components 11 and/or the folding table 12 to move in the direction away from each other. For example, when the conveying component 11 and/or the folding table 12 perform or performs the first step or the second step, the conveying component 11 and/or the folding table 12 are or is controlled to move synchronously in the directions away from each other; or after the conveying component 11 and/or the folding table 12 perform or performs the first step or the second step, the conveying component 11 and/or the folding table 12 are or is controlled to move integrally in the direction away from each other.

It should be noted that controlling the conveying component 11 and/or the folding table 12 to move by the preset displacement amount 1d in the direction away from each other means that: if one of the conveying component 11 and the folding table 12 is controlled to move in the direction away from each other, a movement amount of the conveying component 11 or the folding table 12 is the preset displacement amount 1d; and if both the conveying component 11 and the folding table 12 are controlled to move in the direction away from each other, the sum of movement amounts of the conveying component 11 and the folding table 12 is the preset displacement amount 1d.

Such a design can effectively compensate for the space compressed due to the increase of a quantity of times of folding, which facilitates folding of the electrode sheet group 20, and also facilitates stress release of the electrode sheet group 20 during folding, thereby improving quality of the laminated battery.

According to some embodiments of the present application, referring to FIG. 6, the ratio of the preset displacement amount 1d to the thickness of the electrode sheet group 20 in the lamination region 21 is denoted as α, and 1 ≤ α ≤ 5.

The thickness of the electrode sheet group 20 in the lamination region 21 refers to the sum of thicknesses of the first electrode sheet 22, the second electrode sheet 23, and the separator 24 in the lamination region 21. The thickness of the electrode sheet group 20 in the lamination region 21 can be determined according to the actual structural design in the lamination region 21. For example, in the lamination region 21, the electrode sheet group 20 may include a first electrode sheet 22, separators 24 disposed on two opposite side faces of the first electrode sheet 22, and a second electrode sheet 23 disposed on one of the separators 24. In this case, the thickness of the electrode sheet group 20 in the lamination region 21 may be the sum of thicknesses of the first electrode sheet 22, the second electrode sheet 23, and the two separators 24.

α may take a value between 1 and 5, for example, α may be, but is not limited to, 1, 1.2, 1.5, 2.0, 2.5, 3, 4, or 5. When α is 1, the conveying component 11 or the folding table 12 moves by the thickness of one electrode sheet group 20 in the direction away from each other; and when α is 5, the conveying component 11 or the folding table 12 moves by thicknesses of five electrode sheet groups 20 in the direction away from each other.

The ratio of the preset displacement amount 1d to the thickness of the electrode sheet group 20 in the lamination region 21 is controlled to be between 1 and 5, which is convenient for the conveying component 11 or the folding table 12 to recede an appropriate displacement after folding, and leaves a reasonable space for the electrode sheet group 20 between the conveying component 11 and the folding table 12, so as to realize a stable and effective folding process.

According to some embodiments of the present application, a condition that α further satisfies is: 2 ≤ α ≤ 3.

α may take a value between 2 and 3, for example, a value of α may be, but is not limited to, 2, 2.2, 2.4, 2.6, 2.8, or 3.

A value of α is further controlled to be between 2 and 3, so that after each time of folding, a space between the conveying component 11 and the folding table 12 is controlled more properly, thereby making the folding process of the electrode sheet group 20 on the folding table 12 more stable.

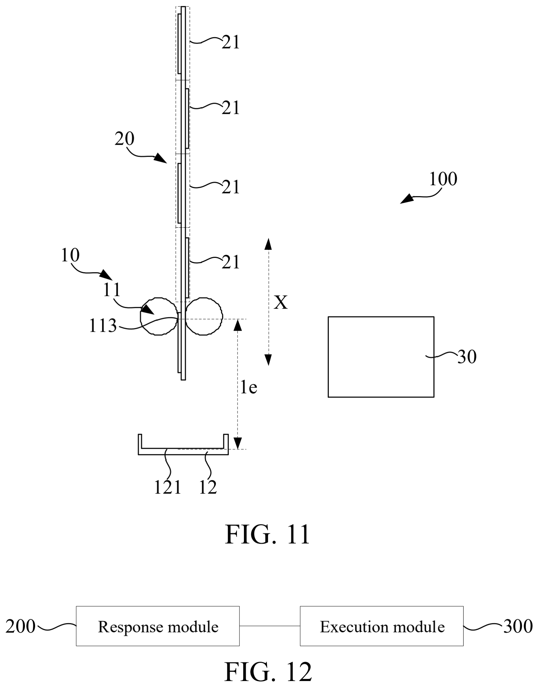

According to some embodiments of the present application, referring to FIG. 11, before the step S200 of controlling the conveying component 11 and/or the folding table 12 to rotate around respective axis centers, the method further includes:
controlling the minimum spacing between the conveying end 113 of the conveying component 11 and a working surface 121 of the folding table 12 to be an initial spacing 1e, where the ratio of the initial spacing 1e to the length of the lamination region 21 is denoted as λ, and 1.2 ≤ λ ≤ 2.

The minimum spacing between the conveying end 113 and the working surface 121 refers to the length of a perpendicular line segment obtained by drawing a perpendicular line from the conveying end 113 to the working surface 121, which is the initial spacing 1e. For details, reference may be made to the distance represented by 1e in FIG. 11.

A specified size of the initial spacing 1e affects folding effects of the electrode sheet group 20 on the folding table 12. For example, if the initial spacing 1e is less than the length of one lamination region 21, a part of the same lamination region 21 is still located on the conveying component 11, whereas the other part has been folded on the folding table 12, which makes it more difficult to release stress on the lamination region 21, and also unable to perform Z-shaped back-and-forth folding normally. If the initial spacing 1e is excessively large, two or more lamination regions 21 are suspended between the conveying component 11 and the folding table 12, which tends to cause misalignment in folding directions during back-and-forth folding, and folding efficiency is also reduced.

Therefore, the ratio of the initial spacing 1e to the length of the lamination region 21 is controlled to be between 1.2 and 2, for example, λ may be, but is not limited to, 1.2, 1.3, 1.4, 1.5, 1.6, 1.7, 1.8, 1.9, or 2

With such a design, the ratio of the initial spacing 1e to the length of the lamination region 21 is controlled to be between 1.2 and 2, so that there is a lamination region 21 that can be suspended between the conveying component 11 and the folding table 12, the folding process can be stably performed, and it is also beneficial to improve folding efficiency.

According to some embodiments of the present application, a condition that λ further satisfies is: 1.3 ≤ λ ≤ 1.6.

The ratio of the initial spacing 1e to the length of the lamination region 21 is controlled to be between 1.3 and 1.6, for example, λ may be, but is not limited to, 1.3, 1.35, 1.4, 1.45, 1.5, 1.55, or 1.6.

In this way, the ratio of the initial spacing 1e to the length of the lamination region 21 is further controlled to be between 1.3 and 1.6, which facilitates more precise control on folding of the electrode sheet group 20, and further improves stability and folding efficiency of the folding procedure.

According to some embodiments of the present application, the step in response to the lamination region 21 being folded on the folding table 12 includes: controlling the conveying displacement amount of the electrode sheet group 20 by the conveying end 113 of the conveying component 11 to be a second displacement, where the ratio of the second displacement to the length of the lamination region 21 is denoted as ε, and 2 ≤ ε ≤ 10.

The conveying displacement amount of the electrode sheet group 20 by the conveying end 113 of the conveying component 11 may also be understood as a displacement of the electrode sheet group 20 moving towards the folding table 12 under the action of the conveying component 11. On the premise that the initial spacing 1e is controlled to be between 1.2 and 2, the conveying displacement amount of the electrode sheet group 20 by the conveying end 113 of the conveying component 11 is controlled to be between 2 and 10, so that at least one of the lamination regions 21 has been or starts to be folded on the folding table 12. For example, ε may be, but is not limited to, 2, 3, 4, 5, 6, 7, 8, 9, or 10.

With such a design, the conveying displacement amount of the electrode sheet group 20 by the conveying end 113 of the conveying component 11 is controlled to be between 2 and 10, so that at least one of the lamination regions 21 has been folded on the folding table 12, which is convenient for stress release of a folding lamination region 21, reduces bending and warping at the folding position 25, and improves quality of the laminated battery.

According to some embodiments of the present application, a condition that ε further satisfies is: 2.1 ≤ ε ≤ 2.9.

On the premise that the initial spacing 1e is controlled to be between 1.2 and 2, the conveying displacement amount of the electrode sheet group 20 by the conveying end 113 of the conveying component 11 is controlled to be between 2.1 and 2.9, which may reduce a quantity of times of folding of the lamination region 21 on the folding table 12 before a rotation policy is executed.

The conveying displacement amount ε of the electrode sheet group 20 by the conveying end 113 of the conveying component 11 may be controlled to be between 2.1 and 2.9. For example, ε may be, but is not limited to, 2.1, 2.2, 2.3, 2.4, 2.5, 2.6, 2.7, 2.8, or 2.9.

The conveying displacement amount of the electrode sheet group 20 by the conveying end 113 of the conveying component 11 is further controlled to be between 2.1 and 2.9, which reduces a quantity of times of folding of the lamination region 21 on the folding table 12 before executing the rotation policy, is convenient for most of the folding procedure of the electrode sheet group 20 to be improved by the rotation policy, and further improves quality of the laminated battery.

According to some embodiments of the present application, referring to FIG. 12, the present application provides an electrode sheet folding control device, which adopts any one of the above electrode sheet folding control methods. The electrode sheet folding control device includes a response module 200 and an execution module 300. The response module 200 is configured to obtain a folding status of the lamination region 21 on the folding table 12 and feed back a signal; and the execution module 300 is configured to control the conveying component 11 to operate, and control the conveying component 11 and/or the folding table 12 to rotate around the respective axis centers according to the signal fed back by the response module 200.

The response module 200 refers to an apparatus capable of obtaining an execution timing of movement of the conveying component 11 or the folding table 12, for example, the response module 200 may be selected as a displacement sensing module to obtain a conveying displacement of the electrode sheet group 20 by the conveying component 11. For example, if the obtained conveying displacement is between 2.1 and 2.9, a signal is fed back to the execution module 300; or the response module 200 may be a visual module, such as a CCD, and when folding action information on the folding table 12 is obtained, a signal is fed back to the execution module 300.

The execution module 300 refers to an apparatus capable of controlling the operation of the conveying component 11 and controlling rotation of the conveying component 11 or the folding table 12, for example, the execution module 300 may be a single-chip microcomputer or an electronic control.

The above electrode sheet folding control device adopts the above electrode sheet folding control method, and utilizes the response module 200 to provide a determining timing for the execution module 300 to control rotation of the conveying component 11 or the folding table 12. In this way, a receding space can be provided for folding of the lamination region 21, thus facilitating stress release of the lamination region 21 during folding, reducing a pulling force of a lamination region 21 in a folded state on a lamination region 21 in a non-folded state, and reducing a bending and warping degree of the lamination region 21 at the folding position 25. In this case, a formed laminated structure has a reduced probability of abnormal gaps 1f at the folding position 25, thus effectively reducing the probability of lithium precipitation of an electrode sheet at the folding position 25, and improving quality of a laminated battery.

According to some embodiments of the present application, the present application provides an electrode sheet folding device 100, and the electrode sheet folding device 100 includes an electrode sheet folding mechanism 10 and a driving mechanism 30. The electrode sheet folding mechanism 10 includes a folding table 12 and a conveying component 11 for conveying an electrode sheet group 20 and folding the electrode sheet group 20 back and forth on the folding table 12; and the driving mechanism 30 is configured to drive the conveying component 11 and/or the folding table 12 to rotate around respective axis centers.

The electrode sheet folding mechanism 10 refers to an apparatus capable of folding the electrode sheet group 20 back and forth on the folding table 12 in a Z shape; and the electrode sheet group 20 refers to a combined structure formed by laminating a first electrode sheet 22, a separator 24, and a second electrode sheet 23. In order to enable the electrode sheet group 20 to be continuously folded back and forth in a Z shape to form a laminated structure, the electrode sheet group 20 has several continuous and foldable lamination regions 21 in a length direction of the electrode sheet group 20, and there is a crease between two adjacent lamination regions 21. The crease may be provided on one side face of the electrode sheet group 20, or may be provided on two opposite side faces of the electrode sheet group 20, that is, double-sided creases.

The conveying component 11 refers to an apparatus that provides conveying power for the electrode sheet group 20, and may be a roller structure. For example, the conveying component 11 may include a first roller 111 and a second roller 112 that cooperate with each other, and the electrode sheet group 20 is clamped between the first roller 111 and the second roller 112. In this case, the conveying end 113 of the conveying component 11 acting on the electrode sheet group 20 may be understood as an end of the first roller 111 or the second roller 112 in contact with the electrode sheet group 20. Certainly, in some embodiments, the conveying end 113 of the conveying component 11 may also be determined by connecting the centers of the first roller 111 and the second roller 112, and an intersection point of the connection line and the first roller 111 or the second roller 112 may also be regarded as the conveying end 113 of the conveying component 11. One of the first roller 111 and the second roller 112 may be a driving roller, and the other may be a driven roller, or certainly, both of the first roller 111 and the second roller 112 may be driving rollers.

The folding table 12 refers to a structure for supporting the laminated structure and providing a supporting force for the folding procedure. For example, during folding, the conveying component 11 moves the electrode sheet group 20 towards the folding table 12, so that an end of the lamination region 21 is in contact with a working surface 121 of the folding table 12; and as the conveying continues, an end of the lamination region 21 gradually bends and fits towards the working surface 121 with a contact point on the working surface 121 as the folding start point 26.

The driving mechanism 30 refers to an apparatus that provides power for rotation of the conveying component 11 or the folding table 12, for example, the driving mechanism 30 may be, but is not limited to, a motor, or may be a combined structure of a motor and a transmission mechanism, for example, a combination of a motor and a gear set or a combination of a motor and a belt.

In addition, it should be noted that the electrode sheet folding device 100 in the present application may also adopt the electrode sheet folding control method proposed in any one of the above embodiments.

In the above electrode sheet folding device 100, during folding of the electrode sheet group 20, the electrode sheet group 20 is driven to move towards the folding table 12 by the conveying component 11. When a lamination region 21 which is being folded starts to appear or is already present on the folding table 12, at least one of the conveying component 11 and the folding table 12 is driven by the driving mechanism 30 to rotate around respective axis centers, such that the connection line distance between the conveying end 113 of the conveying component 11 and the folding start point 26 on the folding table 12 is increased. In this way, a receding space can be provided for folding of the lamination region 21, thus facilitating stress release of the lamination region 21 during folding, reducing a pulling force of a lamination region 21 in a folded state on a lamination region 21 in a non-folded state, and reducing a bending and warping degree of the lamination region 21 at the folding position 25. In this case, a formed laminated structure has a reduced probability of abnormal gaps 1f at the folding position 25, thus effectively reducing the probability of lithium precipitation of an electrode sheet at the folding position 25, and improving quality of a laminated battery.

According to some embodiments of the present application, the present application further provides a battery production system, including the above electrode sheet folding device 100.

According to some embodiments of the present application, referring to FIG. 1 to FIG. 12, the present application provides an electrode sheet folding control method, during folding, the electrode sheet group 20 starts to be conveyed and is input into the double rollers; at this time, the folding table 12 does not move, and the double rollers continuously rotate relative to each other to convey the electrode sheet group 20 downward. The initial spacing 1e between the double rollers and the folding table 12 is the length of about 1.2 to 2 lamination regions 21, and when the double rollers convey the electrode sheet group 20 by the length of 2.1 to 2.9 lamination regions 21 downward, the folding table 12 starts to rotate clockwise or counterclockwise at the same time, which increases the spacing between the double rollers and the folding table 12 to generate a receding space, reduces bending of an electrode sheet passing through an exit of the double rollers, and reduces a pulling force at a corner. Subsequently, after the double rollers continue to convey the electrode sheet group 20 by the length of 0.3 to 0.7 lamination regions 21, the folding table 12 rotates to a left/right end point (the maximum rotation angle is between 0° and 60°). Next, the folding table 12 starts to reset and returns to the initial position 1c; and then the folding table 12 rotates in the other direction and then returns to the initial position 1c again (the folding table 12 rotates for one cycle, which exactly corresponds to the length of two lamination regions 21 by which the double rollers convey the electrode sheet group 20). The folding table 12 starts to move down after one rotation cycle is completed, until lamination is completed. It should be noted that each time the folding table 12 completes one rotation cycle, the folding table 12 moves down synchronously by the thickness of the electrode sheet group 20 in about 1 to 5 lamination regions 21.

The technical features of the above-mentioned example may be combined, and all possible combinations of the technical features in the above-mentioned embodiments are not described for concise description, however, it should be regarded that the combinations of the technical features are with the range described in the present description as long as there is no inconsistency.

The above examples merely illustrate several implementations of the present application, which are described specifically and detailedly, but are not to be construed as limiting the scope of the patent application. It should be noted that, for those skilled in the art, several variations and modifications may be made without departing from the concept of the present application, which are all within the protection scope of the present application. Therefore, the scope of patent protection of this application shall be subject to the appended claims.

## Claims

1. An electrode sheet folding control method, wherein an electrode sheet folding mechanism (10) comprises a folding table (12) and a conveying component (11) for conveying an electrode sheet group (20); the electrode sheet group (20) has several lamination regions (21) in a length direction of the electrode sheet group, the lamination region (21) has a folding start point (26) on the folding table (12), and the conveying component (11) comprises a first roller (111) and a second roller (112) that are located on both sides of the electrode sheet group (20); and an end of the first roller (111) and an end of the second roller (112) separately in contact with the electrode sheet group (20) are both conveying ends (113), and the axis center of the conveying component (11) is located on a connection line between the two conveying ends (113); and
the electrode sheet folding control method comprises the following steps:
controlling the conveying component (11) to drive the electrode sheet group (20) to be conveyed towards the folding table (12); and
in response to the lamination region (21) being folded on the folding table (12), controlling the conveying component (11) and/or the folding table (12) to rotate around respective axis centers, such that a connection line distance between the conveying end (113) and the folding start point (26) that are on the same side of a connection line between the axis centers of the conveying component (11) and the folding table (12) is increased.

2. The electrode sheet folding control method according to claim 1, wherein the step of controlling the conveying component (11) and/or the folding table (12) to rotate around respective axis centers comprises:
controlling the conveying component (11) and/or the folding table (12) to rotate around the respective axis centers to continuously and periodically execute a rotation policy, the rotation policy comprising a first step and a second step; wherein the first step comprises rotating away from an initial position (1c) of the conveying component (11) or the folding table (12) in a first direction, and rotating to the initial position (1c) in a second direction, and the second step comprises rotating away from the initial position (1c) in the second direction, and rotating to the **initial** position (1c) in the first direction, wherein the first direction is opposite to the second direction.

3. The electrode sheet folding control method according to claim 2, wherein the step of executing the rotation policy comprises:
controlling the folding table (12) to perform the second step in a case in which the lamination region (21) is folded in the first direction; and
controlling the folding table (12) to perform the first step in a case in which the lamination region (21) is folded in the second direction.

4. The electrode sheet folding control method according to claim 2 or 3, wherein the step of executing the rotation policy comprises:
controlling the conveying component (11) to perform the first step in a case in which the lamination region (21) is folded in the first direction; and
controlling the conveying component (11) to perform the second step in a case in which the lamination region (21) is folded in the second direction.

5. The electrode sheet folding control method according to any one of claims 2 to 4, wherein positions that the conveying component (11) or the folding table (12) passes through when rotating in any direction comprise the initial position (1c) and a limit position (1g), and the limit position (1g) and the initial position (1c) are arranged at an acute angle therebetween.

6. The electrode sheet folding control method according to claim 5, wherein an angle between the limit position (1g) and the initial position (1c) is denoted as θ, and in a case in which one of the conveying component (11) and the folding table (12) is controlled to execute the rotation policy, 0° < θ ≤ 60°.

7. The electrode sheet folding control method according to claim 6, wherein a condition that θ further satisfies is: 15° ≤ θ ≤ 30°.

8. The electrode sheet folding control method according to any one of claims 5 to 7, wherein in a case in which the conveying component (11) and/or the folding table (12) rotate or rotates from the initial position (1c) to the limit position (1g), a conveying displacement amount of the electrode sheet group (20) by the conveying end (113) of the conveying component (11) is controlled to be a first displacement (1a), and the ratio of the first displacement (1a) to the length of the lamination region (21) is denoted as γ, wherein 0.3 ≤ γ ≤ 0.7.

9. The electrode sheet folding control method according to claim 8, wherein a condition that γ further satisfies is: 0.3 ≤ γ ≤ 0.4.

10. The electrode sheet folding control method according to any one of claims 5 to 9, wherein the step of executing the rotation policy comprises:
in a case in which the conveying component (11) or the folding table (12) rotates from the initial position (1c) to the limit position (1g), controlling the conveying component (11) or the folding table (12) to rotate at a first angular velocity first and then rotate at a second angular velocity, wherein the first angular velocity is greater than the second angular velocity.

11. The electrode sheet folding control method according to claim 10, wherein the ratio of the first angular velocity to the second angular velocity is denoted as β, and 1.5 ≤ β ≤ 2.5.

12. The electrode sheet folding control method according to claim 11, wherein a condition that β further satisfies is: 1.8 ≤ β ≤ 2.2.

13. The electrode sheet folding control method according to any one of claims 2 to 12, wherein in a case in which the conveying component (11) and/or the folding table (12) have or has completed executing the rotation policy, the conveying displacement amount of the electrode sheet group (20) by the conveying end (113) of the conveying component (11) is the length of at least two of the lamination regions (21).

14. The electrode sheet folding control method according to any one of claims 2 to 13, wherein the step of executing the rotation policy comprises:
controlling the conveying component (11) and/or the folding table (12) to move by a preset displacement amount (1d) in a direction away from each other each time the first step or the second step is completed.

15. The electrode sheet folding control method according to claim 14, wherein the ratio of the preset displacement amount (1d) to the thickness of the electrode sheet group (20) in the lamination region (21) is denoted as α, and 1 ≤ α ≤ 5.

16. The electrode sheet folding control method according to claim 15, wherein a condition that α further satisfies is: 2 ≤ α ≤ 3.

17. The electrode sheet folding control method according to any one of claims 1 to 16, wherein before the step of controlling the conveying component (11) and/or the folding table (12) to rotate around respective axis centers, the method further comprises:
controlling the minimum spacing between the conveying end (113) of the conveying component (11) and a working surface (121) of the folding table (12) to be an initial spacing (1e), wherein the ratio of the initial spacing (1e) to the length of the lamination region (21) is denoted as 1, and 1.2 ≤ λ ≤ 2.

18. The electrode sheet folding control method according to claim 17, wherein a condition that λ further satisfies is: 1.3 ≤ λ ≤ 1.6.

19. The electrode sheet folding control method according to claim 17 or 18, wherein the step in response to the lamination region (21) being folded on the folding table (12) comprises:
controlling the conveying displacement amount of the electrode sheet group (20) by the conveying end (113) of the conveying component (11) to be a second displacement, wherein the ratio of the second displacement to the length of the lamination region (21) is denoted as ε, and 2 ≤ ε ≤ 10.

20. The electrode sheet folding control method according to claim 19, wherein a condition that ε further satisfies is: 2.1 ≤ ε ≤ 2.9.

21. An electrode sheet folding control device adopting the electrode sheet folding control method according to any one of claims 1 to 20, comprising:
a response module (200), configured to obtain a folding status of the lamination region (21) on the folding table (12) and feed back a signal; and
an execution module (300), configured to control the conveying component (11) to operate, and control the conveying component (11) and/or the folding table (12) to rotate around the respective axis centers according to the signal fed back by the response module (200).

22. An electrode sheet folding device, comprising:
an electrode sheet folding mechanism (10), comprising a folding table (12) and a conveying component (11) for conveying an electrode sheet group (20) and folding the electrode sheet group (20) back and forth on the folding table (12); and
a driving mechanism (30), configured to drive the conveying component (11) and/or the folding table (12) to rotate around respective axis centers.

23. A battery production system, comprising the electrode sheet folding device according to claim 22.
